# EUROPÄISCHE PATENTSCHRIFT

(11) **EP 1 293 773 B1**
(45) Veröffentlichungstag und Bekanntmachung des Hinweises auf die Patenterteilung: **23.01.2008**
(21) Anmeldenummer: 02016181.6
(22) Anmeldetag: 20.07.2002
(51) Int. Cl.: G01N 31/22

(54) **Feuchteanzeiger**
Moisture indicator
Indicateur d'humidité

(30) Priorität: 15.09.2001 DE 20115189 U
(43) Veröffentlichungstag der Anmeldung: 19.03.2003
(73) Patentinhaber: Macherey, Nagel GmbH & Co. Handelsgesellschaft, 52355 Düren (DE)
(72) Erfinder: Radmacher, Edmund, Dr., 52349 Düren (DE); Hoffmann, Jürgen, Dr., 52355 Düren (DE); Möller, Klaus, Dr., 52249 Eschweiler (DE)
(74) Vertreter: Paul, Dieter-Alfred

(56) Entgegenhaltungen:
- WO-A-98/52035
- US-A- 4 717 671
- US-A- 5 834 626
- PATENT ABSTRACTS OF JAPAN vol. 013, no. 037 (P-819), 27. Januar 1989 (1989-01-27) & JP 63 234139 A (DAINICHI COLOR & CHEM MFG CO LTD), 29. September 1988 (1988-09-29)
- PATENT ABSTRACTS OF JAPAN vol. 006, no. 122 (C-112), 7. Juli 1982 (1982-07-07) & JP 57 048905 A (KANEBO LTD), 20. März 1982 (1982-03-20)

## Beschreibung

Die Erfindung betrifft einen Feuchteanzeiger mit einem Träger, der mit einem Stoff versehen ist, der ein feuchtigkeitsanzeigendes Mittel enthält, das seine Farbe in Abhängigkeit von der Feuchte reversibel ändert, wobei das feuchtigkeitsanaeigende Mittel ein pH-Indikatorfarbstoff ist, der mit einem Zinksalz kombiniert ist und einen Farbumschlag im sauren Bereich hat.

Feuchteanzeiger der vorliegenden Art werden zur Bestimmung der relativen Luftfeuchte vielseitig angewendet, beispielsweise in verpackten Produkten, um das Eindringen von Feuchte während Lagerung und Transport feststellen zu können. Solche Feuchteanzeiger sind auch in Form von Testpapieren und -karten bekannt. Als Träger dient ein saugfähiges Papier, das mit einem Stoff imprägniert ist, der ein feuchtigkeitsanzeigendes Mittel enthält. Dieses feuchtigkeitsanzeigende Mittel ändert seine Farbe reversibel in Abhängigkeit von der relativen Feuchte. Durch die Beurteilung der Farbe oder durch Vergleich mit einer dagegengehaltenen Farbvergleichsfläche kann die relative Feuchte bis auf eine Empfindlichkeitsgrenze von etwa ± 5 % ermittelt werden.

Als feuchtigkeitsanzeigendes Mittel ist in großem Umfang Kobalt(II)chlorid verwendet worden (vgl. US 3,216,802; DE 40 32 025 C2). Dieses feuchtigkeitsanzeigende Mittel hat ein hohes toxisches Potential und steht unter dem Verdacht, carcinogen zu sein (vgl. WO 00/65339; WO 01/09601 A1).

In den vorgenannten Dokumenten sind deshalb Vorschläge für Feuchteanzeiger gemacht worden, bei denen ein Kieselgelträger verwendet wird, der einmal mit Eisen(II)-und/oder Eisen(III)salzen (WO 00/65339) oder mit Kupferchlorid und einem oder mehreren Metallchloriden (WO 01/09601 A1) imprägniert wird. Diese Farbanzeiger haben jedoch einen nicht sehr deutlich erkennbaren Farbumschlag.

Zur adsorptiven Trocknung von neutralen Gasen ist es bekannt, das Gas mit insbesondere partikelförmigen Adsorptionskörpern auf Basis anorganischer Oxide in Kontakt zu bringen (vgl. US 5,766,312; EP 0 648 532 A2). Die Adsorptionskörper werden mit einem organischen Indikatorfarbstoff versehen, um die relative Feuchte in dem neutralen Gas während des Trocknungsvorgangs anzeigen zu können. Dabei werden Indikatorfarbstoffe aus der Gruppe Phenolphthalein, Kresolrot und Thymolblau angegeben. Die Adsorptionskörper werden mit diesem Indikatorfarbstoff in Form einer Lösung imprägniert und anschließend getrocknet. Auch hier sind die Farbumschläge nicht besonders deutlich.

In der WO 98/52035 ist ein Zeitanzeiger offenbart. Auf einem Träger aus Papier oder Polyester ist ein Stoff aufgetragen, der als anzeigendes Mittel einen pH-Indikatorfarbstoff enthält. Als Farbstoff sind angegeben Phenolphthalein, Kresolrot, Neutralrot, Rosolsäure, Brilliantgelb und O-Kresolphthalein. Zusätzlich ist eine hygroskopische Substanz vorgesehen, beispielsweise Calciumchloriddihydrat, Calciumchloridhexahydrat, Litiumchloridhydrat, Magnesiumnitrathexahydrat und Zinksulfatheptahydrat.

Der Erfindung liegt die Aufgabe zugrunde, einen Feuchteanzeiger der eingangs genannten Art so zu gestalten, daß er bei sich ändernder Feuchte eine besonders deutliche Anzeige gibt.

Diese Aufgabe wird erfindungsgemäß dadurch gelöst, daß der Indikatorfarbstoff zu der Gruppe m-Kresolpurpur, Thymolblau, Tropaeolin OO oder p-Xylenolblau gehört. Grundgedanke der Erfindung ist es also, eine Kombination aus einem bestimmten pH-Indikatorfarbstoff und zinksalz zu verwenden. Es hat sich gezeigt, daß hierdurch besonders deutliche Farbumschläge erzielbar sind und daß deshalb die relative Luftfeuchte durch Vergleich mit einer Farbvergleichsskala einfach und mit hoher Aussagekraft durchgeführt werden kann. Die vorgenannten Indikatorfarbstoffe zeichnen sich besonders wegen ihrer spektralen Farbänderung aus und sind zudem nicht gesundheitsschädlich.

Als Zinksalz kommen verschiedene Variationen in Frage, beispielsweise Zinkchlorid, zinknitrat, Zinksulfat oder Zinkacetat, die wasserfrei oder in Form ihrer Hydrate käuflich sind.

Damit das Zinksalz den Indikatorfarbstoff möglichst gut zur Geltung bringt, sollten Indikatorfarbstoff und Zinksalz in einem Gewichtsverhältnis von mindestens 1:5, vorzugsweise 1:20, besser noch 1:30, vorliegen. Je nach Art und Mengenverhältnis des eingesetzten Zinksalzes variiert der Farbumschlag.

Die Herstellung des Feuchteanzeigers kann in der Weise erfolgen, daß 0,1 g Indikatorfarbstoff und eine geeignete Menge Zinksalz im Bereich von 1,15 bis 3,3 g - der Anteil kann geringer und höher sein - in 60 ml Aceton und 40 ml destilliertem Wasser gelöst werden und daß dann ein saugfähiges Trägermaterial, zum Beispiel Filtrierpapier oder Vliesstoff, vollflächig, streifen- oder punktförmig mit dieser Lösung imprägniert und dann getrocknet wird. Die nachstehenden Tabellen 1 bis 4 geben die Farbumschläge bei Verwendung unterschiedlicher Zinksalze und Indikatorfarbstoffe an, wobei jeweils in der obersten Zeile fettgedruckt die eingesetzte Menge Zinksalz und zwei Feuchtegehalte angegeben sind. Jeweils darunter ist die Farbe bei dem erstgenannten Feuchtegehalt und die Farbe bei dem zweitgenannten Feuchtegehalt angegeben. Es ist zu erkennen, daß bei Einsatz der angegebenen Indikatorfarbstoffe ohne ein Zinksalz kein Farbumschlag erfolgt, während schon bei 1,15 g Zinksalz ein deutlich erkennbarer Farbumschlag zwischen einer 40 %igen und einer < 8 %igen Feuchte angegeben ist.

Statt eines saugfähigen Trägermaterials kann auch ein Adsorbens, beispielsweise Kieselgel, verwendet werden.

### Farbumschläge

**Tabelle 1: Zinkchlorid**

| **Farbstoff** | **ohne ZnCl₂ 40%//<8%** | **1,15g ZnCl₂ 40%//<8%** | **3,3g ZnCl₂ 40% // <8%** |
|---|---|---|---|
| Tropaeolin 00 | gelb // gelb | gelb // braun-rot | gelb // violett |
| p-Xylenoiblau | gelb // gelb | gelb-orange // rot | gelb-orange //rot-violett |
| Thymolblau | gelb //gelb | orange // rot-violett | rot-orange // rot-violett |
| m-Kresolpurpur | gelb // gelb | orange // rot | orange // kräftig rot |

**Tabelle 2: Zinknitrat-Tetrahydrat**

| **Farbstoff** | **ohne Zn(NO₃)₂ 40% // < 8%** | **1,15g Zn(NO₃)₂ 40% // <8%** | **3,3g Zn(NO₃)₂ 40% // <8%** |
|---|---|---|---|
| Tropaeolin 00 | gelb **//** gelb | gelb // hellbraun | gelb // braun |
| p-Xylenotblau | gelb // gelb | gelb-orange // rot | gelb-orange // rot |
| Thymolblau | gelb //gelb | orange // rot | rot-orange // rot-violett |
| m-Kresolpurpur | gelb // gelb | gelb // rot | gelb // rot |

**Tabelle 3: Zinksulfat-Heptahydrat**

| **Farbstoff** | **ohne ZnSO₄ 40% // < 8%** | **1,15g ZnSO₄ 40% // < 8%** | **3,3g ZnSO₄ 40% // < 8%** |
|---|---|---|---|
| Tropaeolin 00 | gelb // gelb | gelb // gelb | gelb // gelb |
| p-Xylenolblau | gelb // gelb | gelb // schwach rot | gelb // schwach rot |
| Thymolblau | gelb // gelb | orange // schwach rot | rot-orange // schwach rot |
| m-Kresolpurpur | gelb // gelb | gelb // hellrot | gelb // hellrot |

### Farbumschläge

**Tabelle 4: Zinkacetat-Dihydrat**

| **Farbstoff** | **ohne Zn(ac)₂ 40% // < 8%** | **1,15g Zn(ac)₂ 40% // <8%** | **3,3g Zn(ac)₂ 40% // < 8%** |
|---|---|---|---|
| Tropaeolin 00 | gelb // gelb | gelb // gelb | gelb // gelb |
| p-Xylenolblau | gelb // gelb | gelb // schwach orange | gelb // schwach orange |
| Thymolblau | gelb // gelb | gelb // schwach rot | gelb // schwach rot |
| m-Kresolpurpur | gelb // gelb | gelb // schwach rot | gelb // schwach rot |

## Patentansprüche

1. Feuchteanzeiger mit einem Träger, der mit einem Stoff versehen ist, der ein feuchtigkeitsanzeigendes Mittel enthält, das seine Farbe in Abhängigkeit von der Feuchte reversibel ändert, wobei das feuchtigkeitsanzeigende Mittel ein pH-Indikatorfarbstoff ist, der mit einem Zinksalz kombiniert ist, **dadurch gekennzeichnet, daß** der Indikatorfarbstoff einen Farbumschlag im sauren Bereich hat, und zu der Gruppe m-Kresolpurpur, Thymolblau, Tropaeolin 00 oder p-xylenolblau gehört.

2. Feuchteanzeiger nach Anspruch 1, **dadurch gekennzeichnet, daß** das zinksalz zinkchlorid, Zinknitrat, Zinksulfat und/oder zinkacetat ist.

3. Feuchteanzeiger nach Anspruch 1 oder 2, **dadurch gekennzeichnet, daß** Indikatorfarbstoff und Zinksalz in einem Gewichtsverhältnis von mindestens 1:5 vorliegen.

4. Feuchteanzeiger nach Anspruch 3, **dadurch gekennzeichnet, daß** Indikatorfarbstoff und Zinksalz in einem Gewichtsverhältnis von mindestens 1:20 vorliegen.

5. Feuchteanzeiger nach einem der Ansprüche 1 bis 4, **dadurch gekennzeichnet, daß** der Träger aus einer saugfähigen Cellulose oder einem saugfähigen Kunststoff, beispielsweise Filterpapier oder Vliesstoff, und/oder aus einem Adsorbens, beispielsweise Kieselgel besteht.

## Claims

1. A moisture indicator comprising a support that is equipped with a substance which contains a moisture-indicating medium that reversibly changes color as a function of moisture, wherein the moisture-indicating medium is a pH indicator dye that is combined with a zinc salt, **characterized in that** the indicator dye has a color change in the acid range and belongs to the group m-cresol purple, thymol blue, Tropaeolin 00, or p-xylenol blue.

2. The moisture indicator as defined in Claim 1, **characterized in that** the zinc salt is zinc chloride, zinc nitrate, zinc sulfate, and/or zinc acetate.

3. The moisture indicator as defined in Claims 1 or 2, **characterized in that** the indicator dye and zinc salt are present at a ratio by weight of at least 1:5.

4. The moisture indicator as defined in Claim 3, **characterized in that** the indicator dye and zinc salt are present at a ratio by weight of at least 1:20.

5. The moisture indicator as defined in one of Claims 1 through 4, **characterized in that** the support consists of an absorbent cellulose or an absorbent plastic, for example filter paper or fiber fabric, and/or an adsorbent, for example silica gel.

## Revendications

1. Indicateur d'humidité comportant un support qui est muni d'une substance contenant un agent indicateur d'humidité qui modifie sa couleur de façon réversible en fonction de l'humidité, dans lequel l'agent indicateur d'humidité est un colorant indicateur de pH qui est combiné à un sel de zinc, **caractérisé en ce que** le colorant indicateur a un changement de couleur dans la plage acide et appartient au groupe du pourpre de m-crésol, du bleu de thymol, de la tropéoline 00 ou du bleu de p-xylénol.

2. Indicateur d'humidité selon la revendication 1, **caractérisé en ce que** le sel de zinc est du chlorure de zinc, du nitrate de zinc, du sulfate de zinc et/ou de l'acétate de zinc.

3. Indicateur d'humidité selon la revendication 1 ou 2, **caractérisé en ce que** le colorant indicateur et le sel de zinc sont présents dans un rapport de masse d'au moins 1:5.

4. Indicateur d'humidité selon la revendication 3, **caractérisé en ce que** le colorant indicateur et le sel de zinc sont présents dans un rapport de masse d'au moins 1:20.

5. Indicateur d'humidité selon l'une des revendications 1 à 4, **caractérisé en ce que** le support se compose d'une cellulose absorbante ou d'une matière plastique ou synthétique absorbante, par exemple un filtre papier ou un tissu non tissé, et/ou d'un adsorbant, par exemple un gel de silice.
